# EUROPÄISCHE PATENTSCHRIFT

(11) **EP 3 067 828 B1**
(45) Veröffentlichungstag und Bekanntmachung des Hinweises auf die Patenterteilung: **26.09.2018**
(21) Anmeldenummer: 16159389.2
(22) Anmeldetag: 09.03.2016
(51) Int. Cl.: G06K 9/00, G06K 9/68, F24C 7/08

(54) **VERFAHREN ZUR ERKENNUNG DER BEWEGUNGSRICHTUNG EINES GEGENSTANDES IM BEREICH EINER GARRAUMÖFFNUNG**
METHOD FOR DETERMINATION OF THE DIRECTION OF MOTION OF AN OBJECT IN THE REGION OF A COOKING SPACE OPENING
PROCEDE DE RECONNAISSANCE DU SENS DE DEPLACEMENT D'UN OBJET DANS LA ZONE D'UNE CHAMBRE DE CUISSON

(30) Priorität: 13.03.2015 DE 102015103690
(43) Veröffentlichungstag der Anmeldung: 14.09.2016
(73) Patentinhaber: RATIONAL Aktiengesellschaft, 86899 Landsberg am Lech (DE)
(72) Erfinder: WAITZ, Reimar, 86899 Landsberg am Lech (DE)
(74) Vertreter: Prinz & Partner mbB

(56) Entgegenhaltungen:
- EP-A1- 2 149 755
- DE-A1-102013 102 293
- YAMATO J ET AL: "Recognizing human action in time-sequential images using hidden Markov model", PROCEEDINGS OF THE COMPUTER SOCIETY CONFERENCE ON COMPUTER VISION AND PATTERN RECOGNITION. CHAMPAIGN, IL, JUNE 15 - 18, 1992; [PROCEEDINGS OF THE COMPUTER SOCIETY CONFERENCE ON COMPUTER VISION AND PATTERN RECOGNITION], NEW YORK, IEEE, US, Bd. -, 15. Juni 1992 (1992-06-15), Seiten 379-385, XP010029393, DOI: 10.1109/CVPR.1992.223161 ISBN: 978-0-8186-2855-9

## Beschreibung

Die Erfindung betrifft ein Verfahren zur Erkennung der Bewegungsrichtung eines vorbestimmten Gegenstandes, insbesondere eines Garzubehörs, im Bereich einer Garraumöffnung eines Gargerätes.

Gargeräte für den professionellen Einsatz, wie sie beispielsweise in Kantinen, Restaurants und der Großgastronomie verwendet werden, können Vorrichtungen aufweisen, um die Beschickung des Gargerätes automatisch zu erkennen. Üblicherweise wird hierbei der Bereich der Garraumöffnung des Gargerätes mithilfe einer Kamera überwacht, die kontinuierlich oder in regelmäßigen Abständen Bilder vom Bereich vor der Garraumöffnung aufnimmt. Um jederzeit mit Sicherheit angeben zu können, welcher Einschub des Gargerätes belegt ist, ist es notwendig, die Bewegungsrichtung von Objekten, die in den Garraum eingeführt oder daraus entnommen werden, zu erkennen, sodass auf ein Einführen oder ein Entnehmen geschlossen werden kann. In der Regel werden Gargüter auf Garzubehör, wie Backblechen, Rosten oder Hordengestellen, in den Garraum eingeführt.

Es ist bekannt, bei einer Einschuberkennung mit Kameras in regelmäßigen Abständen Bilder vom Bereich vor der Garraumöffnung (dem Detektionsbereich) aufzunehmen und die Bilder direkt miteinander zu vergleichen, um durch die Veränderung von Konturen auf eine Bewegungsrichtung schließen zu können.

Der Detektionsbereich ist dabei derjenige Bereich, der von der Kamera erfasst, überwacht und von einer Steuerung ausgewertet wird. Er ist so ausgewählt, dass Objekte, die in den Garraum eingebracht oder aus diesem entnommen werden, den Detektionsbereich passieren müssen.

Nachteilig bei solchen Verfahren zur Einschuberkennung ist der Umstand, dass der Detektionsbereich sowohl die Breite des Einschubes als auch einen großen Teil des Bereiches vor der Garraumöffnung erfassen muss, um die Bewegung von Objekten mit genügender Sicherheit verfolgen zu können. Deswegen wird eine anspruchsvolle Kamera sowie Steuereinheit benötigt, um die Mengen an Bildern ohne nennenswerte Verzögerung auswerten und richtig interpretieren zu können. Außerdem ist es insbesondere bei kontrastarmen Objekten wie z.B. sauberen leeren Blechen oder Behältern mit optisch homogenen Suppen oder Teigen schwierig/fehleranfällig, die Bewegungsrichtung zu erkennen.

Nachteilig ist auch, dass zur Einschuberkennung eine sog. 3D-Kamera nötig ist, die ein zweidimensionales Farbbild liefert und zusätzlich jedem Pixel einen Tiefenwert zuordnet, der dem Abstand des jeweiligen Punktes von der Kamera entspricht. Dadurch kann man die Veränderung von Konturen auswerten (man nennt das den "optischen Fluss"). Wenn jedoch einfachere Sensor-Technologien (z.B. Laser-Triangulation und Time-of-Flight-Laserscanner) verwendet werden, die nur ein eindimensionales Bild von Tiefendaten liefern, ist eine Berechnung des optischen Flusses prinzipiell nicht möglich.

Die DE 10 2013 102 293 A1 offenbart ein Gargerät, bei dem Gargüter mittels einer Kamera beim Einführen in den Garraum erkannt werden. Die von der Kamera aufgenommenen Bilder können auch dazu verwendet werden, die Bewegungsrichtung der Gargüter zu erkennen. Hierzu werden die aufgenommenen Bilder direkt miteinander verglichen.

Das wissenschaftliche Paper "Recognizing Human Action in Time-Sequential Images using Hidden Markov Model" von Yamato et al., Proceedings 1992 IEEE Computer Society Conference on Computer Vision and Pattern Recognition, Champaign, IL, 1992, pp. 379-385 offenbart erste Versuche eines "bottom-up" Ansatzes zur Erkennung von Bewegungen eines Menschen (Tennisspielers) anhand einer Reihe von Bildern. Dabei wird zu jedem Bild ein "feature vector" erstellt, der dann wiederum einem Symbol bzw. "Codeword" zugeordnet wird. Dadurch wird eine Reihe von Symbolen erzeugt. Anhand der Reihenfolge der Symbole in dieser Reihe kann dann auf die in den Bildern dargestellte Bewegung geschlossen werden.

Es ist Aufgabe der Erfindung, ein Verfahren zur Erkennung der Bewegungsrichtung bereitzustellen, dass eine sichere Erkennung der Bewegungsrichtung bei einem verkleinerten Detektionsbereich ermöglicht.

Die Aufgabe wird gelöst durch ein Verfahren zur Erkennung der Bewegungsrichtung eines vorbestimmten Gegenstandes, insbesondere eines Garzubehörs, im Bereich einer Garraumöffnung eines Gargerätes mit den folgenden Schritten:
a) kontinuierliches oder wiederholtes, insbesondere regelmäßig wiederholtes Erstellen von Einschiebebildern eines Detektionsbereiches mittels eines Einschiebesensors,
b) Zuordnen der Einschiebebilder zu jeweils einer Objektkategorie und Vermerken der zugeordneten Objektkategorie in einem Speicher, zumindest sofern sich die Objektkategorie von der zuletzt im Speicher vermerkten Objektkategorie unterscheidet,
c) Ermitteln der Bewegungsrichtung des Gegenstandes anhand der Abfolge der im Speicher vermerkten Objektkategorien,
wobei die Objektkategorien in chronologischer Reihenfolge im Speicher vermerkt werden. Es werden wenigstens drei Objektkategorien unterschieden: Eine Objektkategorie, die einem freien Detektionsbereich entspricht; eine Objektkategorie, die der Gegenwart des Gegenstandes, insbesondere des Garzubehörs, im Detektionsbereich entspricht, und eine Objektkategorie, die der Gegenwart von anderen Objekten im Detektionsbereich entspricht.

Dadurch, dass die Bewegungsrichtung des Gegenstandes lediglich anhand der Abfolge der unterschiedlichen Objektkategorien erkannt wird, die im Speicher vermerkt wurden, entfällt der aufwändige Vergleich von mehreren Einzelaufnahmen einer Kamera zur Richtungserkennung. Auch ist es zur Zuordnung der Einschiebebilder zu einer Objektkategorie nicht notwendig, einen besonders großen Abschnitt, insbesondere entlang der Beschickungsachse, im Bereich der Garraumöffnung zu überwachen. Alleine mithilfe dieser drei Objektkategorien ist es möglich, eine zutreffende Erkennung der Bewegungsrichtung durchzuführen, wodurch der Aufwand zur Bildbearbeitung gesenkt werden kann. Unter dem Begriff "Beschickungsachse" wird dabei eine Normale auf die von der Garraumöffnung aufgespannte Ebene verstanden.

Zudem wird unter einem Einschiebebild eine Darstellung dafür verstanden, in welchen Abschnitten entlang der horizontalen Achse senkrecht zur Beschickungsachse sich ein Objekt im Detektionsbereich befindet. Diese Darstellung muss nicht bildlich sein, sondern kann auch anderweitig erfolgen. Die Auflösung des Detektionsbereiches entlang der Beschickungsachse bzw. die Ausdehnung des Detektionsbereiches entlang der Beschickungsachse ist von geringerer Bedeutung, sodass auch ein nahezu linienartiges Einschiebebild denkbar ist.

Weiterhin werden unter Objektkategorien Kategorien von Objekten verstanden, wie Garzubehör oder Arme und Hände, die sich üblicherweise im Detektionsbereich befinden können. Für die korrekte Erkennung der Bewegungsrichtung ist es nicht notwendig, dass aus dem Einschiebebild Informationen über das Gargut gewonnen werden, das eventuell auf einem Gargutträger oder sonstigem Garzubehör den Detektionsbereich passiert.

Dabei können andere Objekte z. B. die Hände und Arme des Benutzers sein, die in den Detektionsbereich hineingestreckt werden, um das Garzubehör zu bewegen. Jedoch sind auch andere Objekte zur Bewegung des Garzubehörs denkbar.

Vorzugsweise ist der Einschiebesensor ein Kamera-System, insbesondere ein 3D-Kamera-System (z.B. Time-of-Flight Kamera, Triangulations-3D-Kamera, Lichtfeldkamera oder ein stereo-optisches Kamerasystem), ein optischer oder ultraschallbasierter Abstandsmesser, insbesondere eine Lasertriangulationsvorrichtung, ein Time-of-Flight-Laser-Linienscanner und/oder eine Vielzahl an Lichtschranken, eine Kamera, insbesondere eine Time-of-Flight Kamera, ein optischer oder ultraschallbasierter Abstandsmesser, insbesondere eine Lasertriangulationsvorrichtung und/oder eine Vielzahl an Lichtschranken. Durch die Auswahl einer oder mehrerer dieser Vorrichtungen lässt sich auf kostengünstige Weise ein Einschiebesensor realisieren.

Beispielsweise deckt der Detektionsbereich die Garraumöffnung, entlang der Beschickungsachse betrachtet, größtenteils ab, wodurch sämtliche Objekte, die in den Garraum eingeführt werden, zumindest teilweise den Detektionsbereich passieren müssen und so vom Einschiebesensor aufgenommen werden.

Der Detektionsbereich kann eine Ebene parallel zur Garraumöffnung umfassen, die insbesondere in dem Bereich liegt, den eine Tür des Gargerätes in geschlossener Position einnimmt, sodass nicht die Garraumöffnung selbst überwacht werden muss.

Vorzugsweise weist der Detektionsbereich entlang der Beschickungsachse eine Länge von weniger als 5 cm, vorzugsweise weniger als 3 cm und besonders bevorzugt weniger als 1 cm auf, wodurch die Anforderungen an den Einschiebesensor und eine gegebenenfalls verwendete Optik gering gehalten werden kann.

In einer Ausgestaltung der Erfindung erfolgt die Zuordnung der Einschiebebilder zu Objektkategorien anhand des Verhältnisses von belegter Fläche zu unbelegter Fläche und/oder anhand von dem Muster, das sich aus dem Wechsel von belegter Fläche und unbelegter Fläche ergibt. Dabei ergibt sich die berücksichtigte Gesamtfläche aus der Breite des verwendeten Einschubs multipliziert mit der Länge des Detektionsbereiches entlang der Beschickungsachse, jeweils in der Höhe des betrachteten Einschubs. Auf diese Weise ist eine einfache und ressourcenschonende Zuordnung der aufgenommenen Einschiebebilder zu Objektkategorien möglich. Denkbar ist auch, dass nicht die gesamte Länge des Detektionsbereiches herangezogen wird. "Belegt" bedeutet dabei in der Regel, dass der Tiefenwert der 3D-Kamera/des Sensors einen Wert liefert, der einer Höhe entspricht, die sich im Bereich der Garraumöffnung befindet.

Beispielsweise wird ein Einschiebebild der Objektkategorie zugeordnet, die der Gegenwart des Gegenstandes, insbesondere des Garzubehörs, im Detektionsbereich entspricht, wenn der Anteil an belegter Fläche größer als 75 %, vorzugsweise größer als 80 %, besonders bevorzugt größer als 90 % ist, wodurch eine einfache und sichere Zuordnung des Gegenstands in die passende Objektkategorie möglich ist.

Ein wichtigeres Kriterium, um festzustellen, dass es sich um einen Gargutträger handelt, ist auch, dass der Bereich um die Verlängerung der Schienen des Einhängegestells belegt ist. Jeder Gargutträger, egal ob Blech, Rost, Wanne, oder auch ein spezialisiertes Zubehör wie Hähnchenspikes und Sparerib-Halter weist eine Kante auf, die in die Schienen des Einhängegestells greift.

Das Einschiebebild kann der Objektkategorie zugeordnet werden, die der Gegenwart des Gegenstandes, insbesondere Garzubehörs im Detektionsbereich entspricht, wenn das Muster aus belegten Flächen zu unbelegten Flächen einem vorbestimmten Muster gleicht. Dabei können das eine oder mehrere vorbestimmte Muster im Speicher abgelegt sein. Auf diese Weise ist es möglich eine differenziertere Einordnung in Objektkategorien vorzunehmen, ohne den Aufwand zu erhöhen.

In einer Ausgestaltung der Erfindung wird das Einschiebebild einer Objektkategorie zugeordnet, die der Gegenwart von anderen Objekten im Detektionsbereich entspricht, wenn die belegte Fläche wenigstens zwei voneinander getrennte Bereiche aufweist, die insbesondere zusammen weniger als 25 % der Gesamtfläche ausmachen, wodurch sichergestellt ist, dass zwei Hände, mit denen ein Benutzer des Gargerätes Garzubehör bewegt, als andere Objekte erkannt werden.

Vorzugsweise wird die Bewegungsrichtung des Gegenstandes, insbesondere Garzubehörs, als "Einführen" ermittelt, wenn folgende Abfolge der Objektkategorien vermerkt wurde:
1. Objektkategorie, die einem freien Detektionsbereich entspricht,
2. Objektkategorie, die der Gegenwart des Gegenstandes, insbesondere Garzubehörs, im Detektionsbereich entspricht,
3. Objektkategorie, die der Gegenwart von anderen Objekten im Detektionsbereich entspricht, und
4. Objektkategorie, die einem freien Detektionsbereich entspricht.

Auf diese Weise ist es durch einen einfachen Vergleich der Abfolge der vermerkten Objektkategorien möglich, auf die Bewegungsrichtung "Einführen" zu schließen.

In einer Ausführungsform der Erfindung wird die Bewegungsrichtung des Gegenstandes, insbesondere Garzubehörs, als "Entnehmen" ermittelt, wenn folgende Abfolge der Objektkategorien vermerkt wurde:
1. Objektkategorie, die einem freien Detektionsbereich entspricht,
2. Objektkategorie, die der Gegenwart von anderen Objekten im Detektionsbereich entspricht,
3. Objektkategorie, die der Gegenwart des Gegenstandes, insbesondere Garzubehörs, im Detektionsbereich entspricht, und
4. Objektkategorie, die einem freien Detektionsbereich entspricht.

Auf diese Weise ist es möglich, durch einen einfachen Vergleich von Objektkategorien die Bewegungsrichtung als "Entnehmen" mit Sicherheit zu bestimmen.

Ebenfalls ist es möglich, weitere Benutzungsvorgänge wie das Überprüfen des Gargutes auf einem Garzubehör oder einen abgebrochenen Einschubversuch eines Garzubehörs, zu unterscheiden.

In einer Ausführungsvariante wird im Falle eines Gargerätes mit mehreren, übereinander angeordneten Einschüben zur Zuordnung der Objektkategorien nur der Ausschnitt des Einschiebebildes herangezogen, der der zur Detektion notwendigen Breite des verwendeten Einschubs entspricht, wodurch die Bewegungsrichtung auch bei Gargeräten mit mehreren übereinander angeordneten Einschüben bestimmt werden kann. Dabei entspricht die zur Detektion benötigte Breite im Regelfall der Gesamtbreite des Einschubes. Sie kann u. U. jedoch auch geringer ausfallen.

Vorzugsweise erstellt der Einschiebesensor zugleich ein Höhenprofil mit jedem Einschiebebild, anhand dessen der verwendete Einschub ermittelt wird, wodurch jederzeit die Belegung jedes Einschubs zweifelsfrei bekannt ist. Das Höhenprofil kann dabei Teil des Einschiebebildes sein.

Die Aufgabe wird ferner gelöst durch ein Gargerät zur Durchführung des oben beschriebenen Verfahrens.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- die Figur 1 ein erfindungsgemäßes Gargerät schematisch in einer seitlichen Schnittansicht,
- die Figur 2 das Gargerät nach Figur 1 schematisch von vorne,
- die Figuren 3a bis 3c das erfindungsgemäße Gargerät nach Figur 1 ausschnittsweise beim Beschicken,
- die Figuren 4a bis 4c den Detektionsbereich des Gargerätes zu den in den Figuren 3a bis 3c gezeigten Situationen, betrachtet in Richtung der Pfeile Achse IV-IV der Figuren 3a bis 3c.
- die Figuren 5a bis 5c schematisch beispielhafte Einschiebebilder zu den in den Figuren 3a bis 3c gezeigten Situationen, und
- die Figuren 6a bis 6c schematisch durch den Einschiebesensor erstellte Einschiebebilder mit Höhenprofile zu den in den Figuren 3a bis 3c gezeigten Situationen.

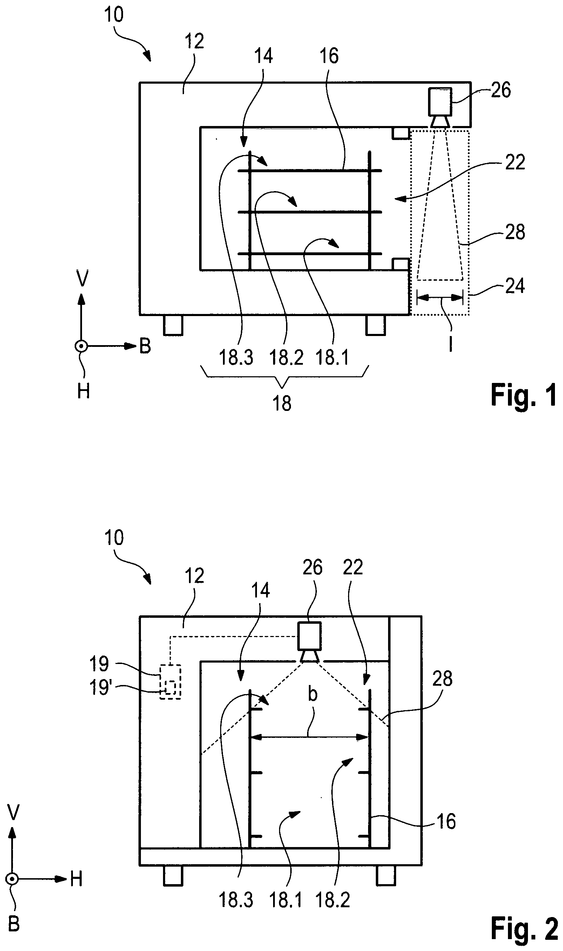

In Figuren 1 und 2 ist ein Gargerät 10 dargestellt. Das Gargerät 10 weist ein Gehäuse 12 auf, in dem ein Garraum 14 ausgebildet ist. Im Garraum 14 ist ein Gestell 16 mit Einschüben 18 angeordnet.

Zudem weist das Gargerät 10 eine Steuereinheit 19 mit einem Speicher 19' auf.

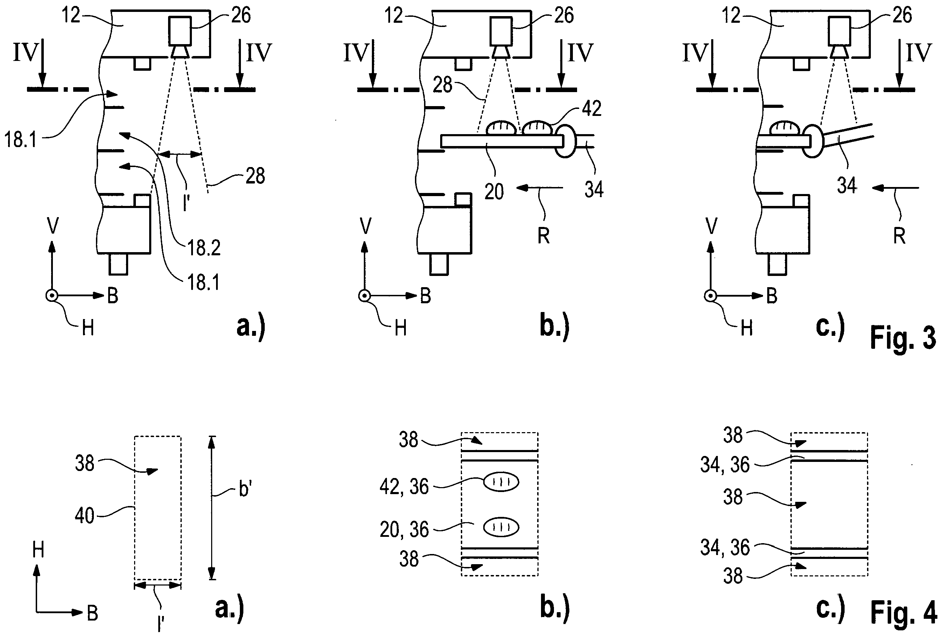

Die Einschübe 18 sind dazu ausgebildet, Gegenstände 20 aufzunehmen, und haben eine Breite b entlang der horizontalen Achse H. Ein Gegenstand 20 kann Garzubehör, wie ein Gargutträger (Figuren 3a bis 3c) sein.

Der Garraum 14 ist mittels einer Garraumöffnung 22 mit der Umgebung verbunden.

Das Gargerät 10 weist zudem eine Tür 24 (in Figur 1 punktiert dargestellt) auf, die schwenkbar am Gehäuse 12 angeordnet ist. Die Tür 24 verschließt in geschlossener Stellung, wie sie in Figur 1 gezeigt ist, die Garraumöffnung 22 und somit den Garraum 14.

Als Beschickungsachse B wird die Raumachse verstanden, die durch eine Normale auf die Ebene der Garraumöffnung 22 bestimmt wird. Diese verläuft in Bezug auf Figur 1 horizontal.

Die vertikale Richtung V verläuft vertikal und senkrecht zur Beschickungsachse B.

Als horizontale Richtung H wird die Richtung bezeichnet, die senkrecht zur Beschickungsachse B horizontal verläuft.

Mit Bezug auf die Darstellung in Figur 1 und die normale Aufstellposition des Gargerätes 10 ist oberhalb der Tür 24 ein Einschiebesensor 26 vorgesehen, der mit der Steuereinheit 19 verbunden ist. In der gezeigten Ausführungsform ist der Einschiebesensor 26 eine Kamera, insbesondere eine Time-of-Flight Kamera.

Denkbar ist selbstverständlich auch, dass der Einschiebesensor 26 aus anderen Vorrichtungen gebildet ist, beispielsweise durch ein Kamera-System, insbesondere ein 3D-Kamera-System (z.B. Time-of-Flight Kamera, Triangulations-3D-Kamera, Lichtfeldkamera oder ein stereo-optisches Kamerasystem), ein optischer oder ultraschallbasierter Abstandsmesser, insbesondere eine Lasertriangulationsvorrichtung, ein Time-of-Flight-Laser-Linienscanner und/oder eine Vielzahl an Lichtschranken.

Der Einschiebesensor 26 erfasst einen als Detektionsbereich 28 bezeichneten Raum im Bereich der Garraumöffnung 22, d.h. in der Garraumöffnung 22 selbst und/oder außerhalb davor. Der Detektionsbereich 28 kann von der Tür 24 im geschlossenen Zustand vollständig verdeckt werden.

Der Detektionsbereich 28 erstreckt sich in der gezeigten Ausführungsform in vertikaler Richtung V vom Einschiebesensor 26 bis mindestens auf die Höhe des untersten Einschubs 18 oder bis auf die Höhe der unteren Begrenzung der Garraumöffnung 22. In horizontaler Richtung H weist der Detektionsbereich 28 an der Höhe des ersten Einschubes 18.1 wenigstens die Breite b der Einschübe 18 auf.

Entlang der Beschickungsachse B ist die Länge I des Detektionsbereiches 28 sehr klein, beispielsweise weniger als 5 cm, vorzugsweise weniger als 3 cm, besonders bevorzugt weniger als 1 cm. Auch ist es denkbar, dass die Länge I gerade der Ausdehnung des zur Detektion verwendeten Laserstrahls entspricht.

Somit deckt der Detektionsbereich 28 die Garraumöffnung 22 entlang der Beschickungsachse B gesehen größtenteils ab, wie in Figur 2 dargestellt. Der Detektionsbereich 28 kann dabei eine Ebene parallel zur Garraumöffnung 22 umfassen.

Der Einschiebesensor 26 erstellt in regelmäßigen Abständen ein Einschiebebild 32 des Detektionsbereiches 28 und erfasst auf diese Weise Gegenstände und Objekte, die sich im Detektionsbereich 28 befinden.

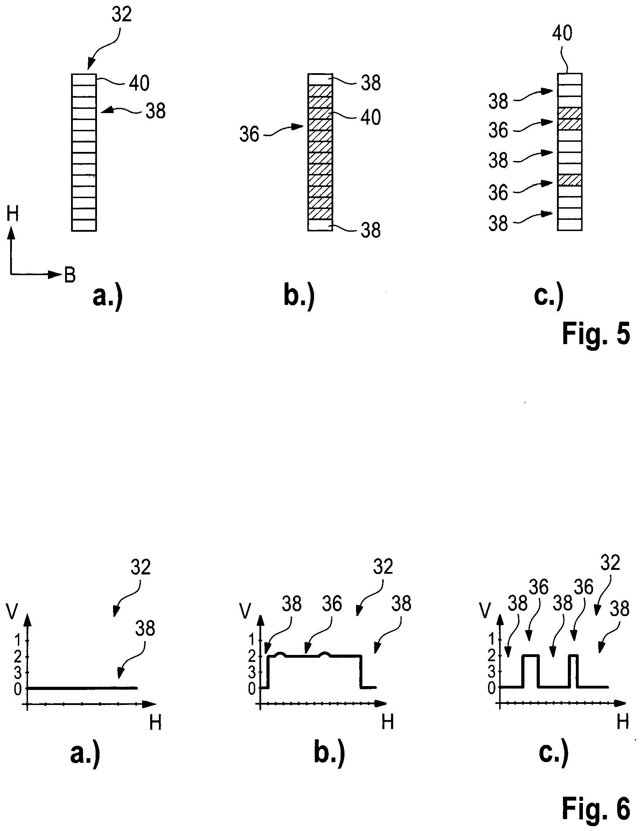

Die Einschiebebilder 32 sind Darstellungen davon, in welchen Abschnitten des Detektionsbereiches 28 entlang der horizontalen Achse H Gegenstände und Objekte vorhanden sind. In den Figuren 5a bis 5c sind schematisch drei verschiedene Einschiebebilder 32 für verschiedene Situationen dargestellt.

Die Auflösung der dargestellten Einschiebebilder 32 ist aus Gründen der Anschauung mit lediglich 14 Pixeln in horizontaler Richtung H sehr grob.

Die Auflösung entlang der Beschickungsachse B ist mit einem Pixel zwar noch geringer, jedoch ist auch theoretisch mit nur einem Pixel Auflösung entlang der Beschickungsachse B eine Bestimmung der Bewegungsrichtung R möglich.

Ebenfalls ist es denkbar, dass der Einschiebesensor 26 zusätzlich Informationen bezüglich der Höhe in vertikaler Richtung V der Gegenstände im Detektionsbereich 28 aufnimmt. Beispiele für Einschiebebilder 32 mit Höheninformationen sind in den Figuren 6a bis 6c gezeigt.

Um die Bewegungsrichtung R eines vorbestimmten Gegenstandes 20 (meist ein Garzubehör wie ein Gargutträger) zu bestimmen, werden mit dem Einschiebesensor 26 regelmäßig wiederholt, d. h. in regelmäßigen Abständen, Einschiebebilder 32 des Detektionsbereiches 28 erstellt. Denkbar ist selbstverständlich auch ein kontinuierliches oder unregelmäßiges Erstellen von Einschiebebildern 32.

Die Einschiebebilder 32 werden anschließend jeweils einer Objektkategorie F, G, A zugeordnet, wobei die zugeordnete Objektkategorie F, G, A im Speicher 19' vermerkt wird.

Die Objektkategorien F, G, A entsprechen dabei jeweils einer bestimmten Situation im Detektionsbereich 28.

Die Zuordnung der Einschiebebilder 32 zur Objektkategorie F, G, A erfolgt anhand des Verhältnisses von belegter Fläche 36 im Einschiebebild 32 zu unbelegter Fläche 38 oder anhand von Mustern, die sich aus dem Wechsel von belegter Fläche 36 und unbelegter Fläche 38 ergeben.

Dabei wird nur diejenige Gesamtfläche 40 berücksichtigt, die den Bereich vor dem verwendeten Einschub 18 repräsentiert. Die Gesamtfläche 40 ergibt sich beispielsweise aus der Breite b des verwendeten Einschubs über die Länge l des Detektionsbereiches 28 entlang der Beschickungsachse B, jeweils in Höhe in vertikaler Richtung V des verwendeten Einschubs 18. Allerdings muss nicht die gesamte Länge l des Detektionsbereiches herangezogen werden.

In der gezeigten Ausführungsform werden drei verschiedene Objektkategorien F, G, A unterschieden. Denkbar sind selbstverständlich, dass auch noch weitere Objektkategorien unterschieden werden.

Die erste Objektkategorie F entspricht der Situation im Bereich der Garraumöffnung 22 in der sich keine Gegenstände oder Objekte im Detektionsbereich 28 befinden. Ein entsprechendes Einschiebebild 32 ist in Figur 5a bzw. mit Höheninformation in Figur 6a dargestellt.

Eine Einsortierung von Einschiebebildern 32 in die Objektkategorie F (für frei) ist dann angezeigt, wenn im Einschiebebild 32 gar keine oder nur vernachlässigbar kleine Abschnitte in horizontaler Richtung H als belegt dargestellt sind.

Im Gegensatz hierzu steht die zweite Objektkategorie G (wie Gegenstand oder Garzubehör), die der Situation im Bereich der Garraumöffnung 22 entspricht, in der ein großer Gegenstand 20, dessen Bewegungsrichtung R zu ermitteln ist, sich im Detektionsbereich 28 befindet. Der Gegenstand 20 kann Garzubehör wie ein Gargutträger, ein Rost oder ein Hordengestell, sein.

Ist der Anteil an belegter Fläche 36 an der Gesamtfläche 40 größer als 75 % so wird das entsprechende Einschiebebild 32 der Objektkategorie G zugeordnet, da der Gegenstand 20, z.B. ein Gargutträger, den Detektionsbereich 28 nahezu über die gesamte Breite b eines Einschubs 18 ausfüllt.

Um eine falsche Zuordnung von Einschiebebildern 32 von kleineren Objekten im Detektionsbereich 28 zu verhindern, kann der Anteil an belegter Fläche 36, der notwendig ist, um ein Einschiebebild 32 in die Objektkategorie G einzusortieren, größer als 80 % oder 90 % gewählt werden.

Eine weitere Kategorie bildet die dritte Objektkategorie A (für Arme), in die Einschiebebilder 32 der Situationen einsortiert werden, in denen kleinere Objekte 34, wie beispielsweise ein paar Hände oder Arme des Benutzers, im Detektionsbereich 28 vom Einschiebesensor 26 erfasst wurden.

In der gezeigten Ausführungsform werden Einschiebebilder 32 in die Objektkategorie A einsortiert, wenn die belegte Fläche 36 des Einschiebebildes 32 wenigstens zwei voneinander getrennte Bereiche aufweist, die zusammen weniger als 25 % der Gesamtfläche 40 ausmachen.

Nach dem Erstellen eines Einschiebebildes 32 und Zuordnen des Einschiebebildes 32 zu einer der Objektkategorien F, G oder A wird die zugeordnete Objektkategorie F, G, A im Speicher 19' der Steuereinheit 19 vermerkt. Die Verweise auf die Objektkategorien F, G, A werden in chronologischer Reihenfolge im Speicher 19' vermerkt, sodass die Steuereinheit 19 eine zeitliche Abfolge von Objektkategorien F, G, A erzeugt.

Denkbar ist, dass Verweise auf die Objektkategorien F, G, A nur dann im Speicher 19' vermerkt werden, sofern sich die Objektkategorie F, G, A des zuletzt aufgenommenen Einschiebebildes 32 von der zuletzt im Speicher 19' vermerkten Objektkategorie F, G, A unterscheidet.

Die Bewegungsrichtung R des Gegenstandes 20 wird anschließend derart bestimmt, dass die Abfolge der im Speicher 19' vermerkten Objektkategorien F, G, A von der Steuereinheit 19 mit vorbestimmten Abfolgen verglichen werden, die jeweils einer Bewegungsrichtung entsprechen.

Dies ist möglich, da beim Einführen oder Entnehmen eines Gegenstandes 20 eine charakteristische Abfolge von Gegenstand 20 und Objekten 34 (Armen) des Benutzers im Detektionsbereich 28 auftritt.

Dies wird im Folgenden anhand des Beschickens eines Einschubs erläutert:
Beim Beschicken des Garraumes 14 führt ein Benutzer einen Gegenstand 20, beispielsweise einen Gargutträger mit einem Gargut 42, durch die Garraumöffnung 22 in den Garraum 14 ein. Einzelne Schritte dieses Vorgangs sind in den Figuren 3a bis 3c dargestellt.

Zunächst ist die Tür 24 (in Figur 3 nicht gezeigt) geöffnet. Im Bereich der Garraumöffnung 22 und somit ebenfalls im Detektionsbereich 28 befinden sich keinerlei Gegenstände oder Objekte (vgl. Fig. 3a und Fig. 4a).

Entsprechend ist das Einschiebebild 32 wie es in Figur 5a dargestellt ist bzw. das Einschiebebild 32 mit Höheninformationen wie es in Figur 6a dargestellt ist vollständig unbelegt.

Die Einsortierung dieses Einschiebebildes 32 erfolgt entsprechend in die Objektkategorie F, welche im Speicher 19' vermerkt wird.

Beim Einführen des Gargutträgers kommt zunächst der Gargutträger selbst in den Detektionsbereich 28, wie in den Figuren 3b und 4b zu erkennen ist. Die Bewegungsrichtung R des Gegenstandes 20, also des Gargutträgers, wird durch die Richtung des Pfeiles R angedeutet.

In Figur 4b ist eine Ansicht dargestellt, wie sie beispielsweise eine Kamera als Einschiebesensor 26 aufnehmen würde. Von der Gesamtfläche 40 (in den Figuren 4 gestrichelt dargestellt) ist eine große Fläche 36 durch einen Gegenstand 20 belegt, namentlich einen Gargutträger mit Gargut 42.

Entsprechend sind folglich 11 von 14 Pixeln des Einschiebebildes 32 als belegte Fläche 36 dargestellt (vgl. Fig. 5b). Das Einschiebebild 32 mit Höheninformation gemäß Figur 6b gibt zudem Auskunft über den Abstand zwischen dem Einschiebesensor 26 und dem Gegenstand 20, sodass auf den zweiten Einschub 18.2 als verwendeter Einschub geschlossen werden kann. Die Höhe des Gargutes 42 wird dabei vernachlässigt.

Die berücksichtige Gesamtfläche 40 ergibt sich nun als Breite b des Einschubs 18.2 multipliziert mit der Länge l' des Detektionsbereiches in Höhe des Einschubs 18.2.

Der Anteil an belegter Fläche 36 an der Gesamtfläche 40 im Einschiebebild 32 ist größer als 75 %, sodass das Einschiebebild 32 der Objektkategorie G zugeordnet wird und die Abfolge von Objektkategorien um die Objektkategorie G ergänzt wird.

Denkbar ist auch, dass die Zuordnung des Einschiebebildes 32 anhand eines Muster erfolgt, das durch einen Wechsel zwischen belegter Fläche 36 und unbelegter Fläche 38 erzeugt wird. Zum Beispiel kann ein Muster, bei dem in regelmäßigen Abständen kurze belegte Flächen 36 auftreten, als ein Rost erkannt und damit das zugehörige Einschiebebild 32 der Objektkategorie G zugeordnet werden.

In der Situation, die in den Figuren 3c und 4c dargestellt ist, wurde der Gegenstand 20, also der Gargutträger, nun noch weiter in den Garraum 14 eingeführt. Es befinden sich nun nur die Arme 34 des Benutzers im Detektionsbereich 28, welche zu zwei voneinander getrennten Flächen mit nur jeweils wenigen Pixeln im Einschiebebild 32 führen, wie Figur 5c zu entnehmen ist. Auch hier entsprechen die Höheninformationen gemäß Figur 6c dem Einschub 2.

Das System ist natürlich auch in der Lage, anstelle der beiden Arme 34 eines Benutzers zu erkennen, dass ein Benutzer ein Küchentuch in beide Hände nimmt und damit den Gargutträger bewegt. Hierbei kann insbesondere darauf zurückgegriffen werden, dass das System erkennt, ob die Verlängerung der Einschubschienen belegt ist.

Die belegte Fläche im Einschiebebild 32 weist wenigstens zwei voneinander getrennte Bereiche auf, deren Gesamtfläche 40 zusammengenommen weniger als 25 % der Gesamtfläche 40 ausmachen. Folglich ist dieses Einschiebebild 32 der Objektkategorie A zuzuordnen, und Objektkategorie A ist an die Abfolge der Objektkategorien anzuhängen.

Sobald der Gargutträger vollständig im Garraum 14 eingebracht wurde, entfernt der Benutzer wieder seine Arme bzw. Hände aus dem Detektionsbereich 28. Somit befinden sich keine Gegenstände oder Objekte mehr im Detektionsbereich 28, und ein Einschiebebild gemäß der Figur 5a bzw. 6a wird aufgenommen, der Objektkategorie F zugeordnet und die Objektkategorie F in der Abfolge vermerkt.

Die chronologische Abfolge der Objektkategorien F, G, A sieht nun wie folgt aus: F-G-A-F.

Die Steuereinheit 19 schließt nun, ohne dass weitere Informationen notwendig wären, aus dieser Abfolge, dass Bewegungsrichtung R ein Einführen ist, da die Abfolge F-G-A-F der Steuereinheit 19 bekannt und mit der Bewegungsrichtung "Einführen" verknüpft ist.

Der entgegengesetzte Vorgang "Entnehmen" ist mit der Abfolge von Objektkategorien F-A-G-F verknüpft, sodass beim Auftreten dieser Abfolge von Objektkategorien von der Steuereinheit 19 auf die Bewegungsrichtung "Entnehmen" geschlossen werden kann.

Mithilfe etwaiger Höheninformationen, wie sie beispielsweise Einschiebebilder 32 gemäß den Figuren 6a bis c aufweisen, lässt sich zudem bestimmen, in welchen Einschub 18.1, 18.2, 18.3 ein Gegenstand 20 eingeführt oder entnommen wird. Somit kann die Belegung jedes Einschubs 18.1, 18.2, 18.3 des Gargerätes 10 zu jeder Zeit verfolgt werden.

Auch sind weitere Benutzungssituationen mithilfe dieses Verfahrens erkennbar.

Beispielsweise entspricht die Abfolge der Objektkategorien F-A-G-A-F der Situation, in der ein Benutzer ein Garzubehör ein Stück weit aus dem Einschub 18 herauszieht, beispielsweise um den Fortschritt des Garvorgangs zu überprüfen, und anschließend wieder vollständig in den Garraum 14 einschiebt.

Hiervon kann auch der Vorgang abgegrenzt werden, in dem ein Benutzer das Einführen eines Garzubehörs in einen der Einschübe 18 abbricht und der Einschub 18 leer bleibt. In diesem Fall lautet die charakteristische Abfolge von Objektkategorien F-G-F oder F-G-A-G-F.

## Patentansprüche

1. Verfahren zur Erkennung der Bewegungsrichtung (R) eines vorbestimmten Gegenstandes (20), insbesondere Garzubehörs, im Bereich einer Garraumöffnung (22) eines Gargerätes (10) mit den folgenden Schritten:
a) kontinuierliches oder wiederholtes, insbesondere regelmäßig wiederholtes Erstellen von Einschiebebildern (32) eines Detektionsbereiches (28) mittels eines Einschiebesensors (26),
b) Zuordnen der Einschiebebilder (32) zu jeweils einer Objektkategorie (F, G, A) und Vermerken der zugeordneten Objektkategorie (F, G, A) in einem Speicher (19'), zumindest sofern sich die Objektkategorie (F, G, A) von der zuletzt im Speicher (19') vermerkter Objektkategorie (F, G, A) unterscheidet,
c) Ermitteln der Bewegungsrichtung (R) des Gegenstandes (20) anhand der Abfolge der im Speicher (19') vermerkten Objektkategorien (F, G, A),
wobei die Objektkategorien (F, G, A) in chronologischer Reihenfolge im Speicher (19') vermerkt werden,
**dadurch gekennzeichnet, dass** wenigstens drei Objektkategorien (F, G, A) unterschieden werden, wobei Objektkategorie F einem freien Detektionsbereich (28) entspricht, Objektkategorie G der Gegenwart des Gegenstandes (20), insbesondere des Garzubehörs, im Detektionsbereich (28) entspricht und die Objektkategorie A der Gegenwart von anderen Objekten (34), insbesondere Händen, im Detektionsbereich (28) entspricht.

2. Verfahren nach Anspruch 1, **dadurch gekennzeichnet, dass** der Einschiebesensor (26) ein Kamera-System ist, insbesondere ein 3D-Kamera-System, ein optischer oder ultraschallbasierter Abstandsmesser, insbesondere eine Lasertriangulationsvorrichtung, ein Time-of-Flight-Laser-Linienscanner und/oder eine Vielzahl an Lichtschranken, eine Kamera, insbesondere eine Time-of-Flight Kamera, ein optisch oder Ultraschall basierter Abstandsmesser, insbesondere eine Lasertriangulationsvorrichtung und/oder eine Vielzahl an Lichtschranken.

3. Verfahren nach Anspruch 1 oder 2, **dadurch gekennzeichnet, dass** der Detektionsbereich (28) eine Ebene parallel zur Garraumöffnung (22) umfasst, die insbesondere in dem Bereich liegt, den eine Tür (24) des Gargerätes (10) in geschlossener Position einnimmt.

4. Verfahren nach einem der vorhergehenden Ansprüche, **dadurch gekennzeichnet, dass** der Detektionsbereich (28) in Bewegungsrichtung eine Länge (l, l') von weniger als 5 cm, vorzugsweise weniger als 3 cm, besonders bevorzugt weniger als 1 cm aufweist.

5. Verfahren nach einem der vorhergehenden Ansprüche, **dadurch gekennzeichnet, dass** die Zuordnung der Einschiebebilder (32) zu Objektkategorien (F, G, A) anhand des Verhältnisses von belegter Fläche (36) zur berücksichtigen Gesamtfläche (40) und/oder anhand von Mustern erfolgt, das sich aus dem Wechsel von belegter Fläche (36) und unbelegter Fläche (38) ergibt.

6. Verfahren nach einem der vorhergehenden Ansprüche, **dadurch gekennzeichnet, dass** ein Einschiebebild (32) der Objektkategorie G zugeordnet wird, wenn der Anteil der belegten Fläche (36) an der Gesamtfläche (40) größer als 75 %, vorzugsweise größer als 80 %, besonders bevorzugt größer als 90 % ist.

7. Verfahren nach einem der vorhergehenden Ansprüche, **dadurch gekennzeichnet, dass** ein Einschiebebild (32) der Objektkategorie G zugeordnet wird, wenn das Muster aus belegter Fläche (36) und unbelegter Fläche (38) einem vorbestimmten Muster gleicht.

8. Verfahren nach einem der vorhergehenden Ansprüche, **dadurch gekennzeichnet, dass** ein Einschiebebild (32) der Objektkategorie A zugeordnet wird, wenn die belegte Fläche (36) wenigstens zwei voneinander getrennte Bereiche aufweist, die insbesondere zusammen weniger als 25 % der Gesamtfläche (40) ausmachen.

9. Verfahren nach einem der vorhergehenden Ansprüche, **dadurch gekennzeichnet, dass** die Bewegungsrichtung (R) des Gegenstandes (20), insbesondere Garzubehörs, als "Einführen" ermittelt wird, wenn folgende Abfolge der Objektkategorien (F, G, A) vermerkt wurde:
1. Objektkategorie F,
2. Objektkategorie G,
3. Objektkategorie A, und anschließend
4. Objektkategorie F.

10. Verfahren nach einem der vorhergehenden Ansprüche, **dadurch gekennzeichnet, dass** die Bewegungsrichtung des Gegenstandes (20), insbesondere Garzubehörs, als "Entnehmen" ermittelt wird, wenn folgende Abfolge der Objektkategorien (F, G, A) vermerkt wurde:
1. Objektkategorie F,
2. Objektkategorie A,
3. Objektkategorie G, und anschließend
4. Objektkategorie F.

11. Verfahren nach einem der vorhergehenden Ansprüche, **dadurch gekennzeichnet, dass** im Falle eines Gargerätes (10) mit mehreren, übereinander angeordneten Einschüben (18) zur Zuordnung der Objektkategorien (F, G, A) nur der Ausschnitt des Einschiebebildes (32) herangezogen wird, der der zur Detektion benötigten Breite (b) des verwendeten Einschubs (18) entspricht.

12. Verfahren nach einem der vorhergehenden Ansprüche, **dadurch gekennzeichnet, dass** der Einschiebesensor (26) zugleich ein Höhenprofil mit jedem Einschiebebild (32) erstellt, anhand dessen der verwendete Einschub (18) ermittelt wird.

13. Verfahren nach einem der vorhergehenden Ansprüche, **dadurch gekennzeichnet, dass** ausgewertet wird, ob ein Bereich in der Verlängerung von Einschubschienen belegt ist.

14. Gargerät mit einem Einschiebesensor und einer mit einem Speicher ausgestatteten Steuereinheit, die zur Durchführung eines Verfahrens gemäß einem der vorhergehenden Ansprüche eingerichtet ist.

## Claims

1. A method for determining the direction of movement (R) of a predetermined object (20), in particular a cooking accessory, in the area of a cooking chamber opening (22) of a cooking appliance (10) comprising the following steps:
a) continuous or repeated, in particular regularly repeated creation of insertion images (32) of a detection area (28) using an insertion sensor (26),
b) allocation of the insertion images (32) to an object category (F, G, A) each and recording the allocated object category (F, G, A) in a storage device (19'), at least provided that the object category (F, G, A) differs from the object category (F, G, A) last recorded in the storage device (19'),
c) determination of the direction of movement (R) of the object (20) by means of the sequence of the object categories (F, G, A) recorded in the storage device (19'),
wherein the object categories (F, G, A) are being recorded in chronological order in the storage device (19'),
**characterized in that** a distinction is made between at least three object categories (F, G, A), with object category F corresponding to an unoccupied detection area, object G corresponding to the presence of the object (20), particularly the cooking accessory, in the detection area (28) and object category A corresponding to the presence of other objects (34), particularly hands, in the detection area (28).

2. The method according to claim 1, **characterized in that** the insertion sensor (26) is a camera system, in particular a 3D camera system, an optical or ultrasonic-based distance sensor, particularly a laser triangulation device, a time-of-flight laser line scanner and/or a plurality of light barriers, a camera, in particular a time-of-flight camera, an optical or ultrasonic-based distance sensor, particularly a laser triangulation device and/or a plurality of light barriers.

3. The method according to claim 1 or 2, **characterized in that** the detection area (28), comprises a level parallel to the cooking chamber opening (22) which is located in particular in the area that the door (24) of the cooking appliance (10) occupies when in a closed position.

4. The method according to any of the preceding claims, **characterized in that** the detection area (28) has a length (l, l') of less than 5cm, preferably less than 3cm, particularly preferably less than 1cm in the direction of movement.

5. The method according to any of the preceding claims, **characterized in that** the allocation of the insertion images (32) to the object categories (F, G, A) is carried out based on the ratio of occupied area (36) to total area (40) taken into consideration and/or based on patterns arising from the alternation of occupied area (36) and unoccupied area (38).

6. The method according to any of the preceding claims, **characterized in that** an insertion image (32) is allocated to the object category G if the share of the occupied area (36) in relation to the total area (40) is larger than 75%, preferably larger than 80%, particularly preferably larger than 90%.

7. The method according to any of the preceding claims, **characterized in that** an insertion image (32) is allocated to the object category G if the pattern of the occupied area (36) and the unoccupied area (38) corresponds to a predetermined pattern.

8. The method according to any of the preceding claims, **characterized in that** an insertion image (32) is allocated to the object category A if the occupied area (36) has at least two separate areas that particularly together account for less than 25% of the total area (40).

9. The method according to any of the preceding claims, **characterized in that** the direction of movement (R) of the object (20), in particular the cooking accessory, is determined as "loading", if the following sequence of object categories (F, G, A) has been recorded:
1. object category F,
2. object category G,
3. object category A, and then
4. object category F.

10. The method according to any of the preceding claims, **characterized in that** the direction of movement of the object (20), in particular the cooking accessory is determined as "unloading" if the following sequence of the object categories (F, G, A) has been recorded:
1. object category F,
2. object category A,
3. object category G, and then
4. object category F.

11. The method according to any of the preceding claims, **characterized in that** in the case of a cooking appliance (10) with several, stacked tray levels (18), only the section of the insertion image (32) that is equal to the necessary detection width (b) of the tray level used (18) is used for allocating the object categories (F, G, A).

12. The method according to any of the preceding claims, **characterized in that** the insertion sensor (26) creates a height profile at the same time as each insertion image (32) which is used to determine the slide-in unit used (18).

13. The method according to any of the preceding claims, **characterized in that** it is assessed whether an area is occupied in the extension of tray level rails.

14. Cooking appliance with an insertion sensor and a control unit that is configured to execute the method according to any of the preceding claims.

## Revendications

1. Procédé de reconnaissance du sens (R) du mouvement d'un objet prédéterminé (20), en particulier d'un accessoire de cuisson, dans la zone d'une ouverture (22) d'un espace de cuisson d'un appareil de cuisson (10), comprenant les étapes suivantes :
a) établissement continu ou répété, en particulier régulièrement répété d'images d'insertion (32) d'une zone de détection (28) au moyen d'un capteur d'insertion (26),
b) association des images d'insertion (32) à une catégorie d'objet respective (F, G, A), et enregistrement de la catégorie d'objet (F, G, A) associée dans une mémoire (19'), au moins lorsque la catégorie d'objet (F, G, A) est différente de la dernière catégorie d'objet (F, G, A) enregistrée dans la mémoire (19'),
c) détermination du sens (R) du mouvement de l'objet (20) sur la base de la suite des catégories d'objet (F, G, A) enregistrées dans la mémoire (19'),
les catégories d'objet (F, G, A) étant enregistrées dans l'ordre chronologique dans la mémoire (19'),
**caractérisé en ce qu'**au moins trois catégories d'objet (F, G, A) sont distinguées, la catégorie d'objet F correspondant à une zone de détection (28) libre, la catégorie d'objet G correspondant à la présence de l'objet (20), en particulier de l'accessoire de cuisson dans la zone de détection (28), et la catégorie d'objet A correspondant à la présence d'autres objets (34), en particulier de mains dans la zone de détection (28).

2. Procédé selon la revendication 1, **caractérisé en ce que** le capteur d'insertion (26) est un système de caméra, en particulier un système de caméra 3D, un télémètre optique ou basé sur des ultrasons, en particulier un dispositif à triangulation laser, un scanner laser linéaire par temps de vol et/ou une pluralité de barrières lumineuses, une caméra, en particulier une caméra temps de vol, un télémètre optique ou basé sur des ultrasons, en particulier un dispositif à triangulation laser et/ou une pluralité de barrières lumineuses.

3. Procédé selon la revendication 1 ou 2, **caractérisé en ce que** la zone de détection (28) comprend un plan parallèle à l'ouverture (22) de l'espace de cuisson qui se trouve en particulier dans la zone occupée par une porte (24) de l'appareil de cuisson (10) dans la position fermée.

4. Procédé selon l'une des revendications précédentes, **caractérisé en ce que** la zone de détection (28) présente, dans le sens du mouvement, une longueur (I, I') inférieure à 5 cm, de préférence inférieure à 3 cm, de manière particulièrement préférée inférieure à 1 cm.

5. Procédé selon l'une des revendications précédentes, **caractérisé en ce que** l'association des images d'insertion (32) à des catégories d'objet (F, G, A) est effectuée sur la base du rapport entre la surface occupée (36) et la surface totale (40) prise en compte, et/ou sur la base de motifs résultant des changements entre la surface occupée (36) et la surface non occupée (38).

6. Procédé selon l'une des revendications précédentes, **caractérisé en ce qu'**une image d'insertion (32) est associée à la catégorie d'objet G lorsque la part de la surface occupée (36) dans la surface totale (40) est supérieure à 75%, de préférence supérieure à 80%, de manière particulièrement préférée supérieure à 90%.

7. Procédé selon l'une des revendications précédentes, **caractérisé en ce qu'**une image d'insertion (32) est associée à la catégorie d'objet G lorsque le motif composé de surface occupée (36) et de surface non occupée (38) ressemble à un motif prédéterminé.

8. Procédé selon l'une des revendications précédentes, **caractérisé en ce qu'**une image d'insertion (32) est associée à la catégorie d'objet A lorsque la surface occupée (36) présente au moins deux zones séparées l'une de l'autre qui représentent en particulier ensemble moins de 25% de la surface totale (40).

9. Procédé selon l'une des revendications précédentes, **caractérisé en ce que** le sens (R) du mouvement de l'objet (20), en particulier de l'accessoire de cuisson est déterminé comme « insertion » lorsque la suite de catégories d'objet (F, G, A) suivante est enregistrée :
1. catégorie d'objet F,
2. catégorie d'objet G,
3. catégorie d'objet A, et ensuite
4. catégorie d'objet F.

10. Procédé selon l'une des revendications précédentes, **caractérisé en ce que** le sens (R) du mouvement de l'objet (20), en particulier de l'accessoire de cuisson est déterminé comme « retrait » lorsque la suite de catégories d'objet (F, G, A) suivante est enregistrée :
1. catégorie d'objet F,
2. catégorie d'objet A,
3. catégorie d'objet G, et ensuite
4. catégorie d'objet F.

11. Procédé selon l'une des revendications précédentes, **caractérisé en ce que** dans le cas d'un appareil de cuisson (10) présentant plusieurs moyens d'insertion (18) agencés les uns au-dessus des autres, seul le détail de l'image d'insertion (32) qui correspond à la largeur (b) du moyen d'insertion (18) utilisé, nécessaire pour la détection, est pris en compte pour l'association de la catégorie d'objet (F, G, A).

12. Procédé selon l'une des revendications précédentes, **caractérisé en ce que** le capteur d'insertion (26) établit en même temps un profil de hauteur avec chaque image d'insertion (32), au moyen duquel le moyen d'insertion (18) utilisé est déterminé.

13. Procédé selon l'une des revendications précédentes, **caractérisé en ce qu'**il est évalué si une zone dans le prolongement de rails d'insertion est occupée.

14. Appareil de cuisson, présentant un capteur d'insertion et une unité de commande qui est équipée d'une mémoire et qui est aménagée pour la réalisation d'un procédé selon l'une des revendications précédentes.
